# FASCICULE DE BREVET EUROPEEN

(11) **EP 3 460 437 B1**
(45) Date de publication et mention de la délivrance du brevet: **27.10.2021**
(21) Numéro de dépôt: 17192945.8
(22) Date de dépôt: 25.09.2017
(51) Int. Cl.: G01L 25/00

(54) **DISPOSITIF D'ETALONNAGE DYNAMIQUE DE COUPLE ET/OU FORCE**
VORRICHTUNG ZUR DYNAMISCHEN KALIBRIERUNG EINES DREHMOMENTS UND/ODER EINER KRAFT
DYNAMIC TORQUE AND/OR FORCE CALIBRATION DEVICE

(43) Date de publication de la demande: 27.03.2019
(73) Titulaire: ETA SA Manufacture Horlogère Suisse, 2540 Grenchen (CH)
(72) Inventeur: GANGUIN, Fabrice, 2740 Moutier (CH); RICHARD, Murielle, 1950 Sion (CH)
(74) Mandataire: ICB SA

(56) Documents cités:
- CN-B- 103 528 752
- JP-A- 2001 228 041
- SIMON HENEIN: "CONCEPTION DES STRUCTURES ARTICULEES A GUIDAGES FLEXIBLES DE HAUTE PRECISION", THESIS ÉCOLE POLYTECHNIQUE FÉDÉRALE DE LAUSANNE,, no. 2194, 1 January 2000 (2000-01-01), pages 1-226, XP007923196,

## Description

### Objet de l'invention

La présente invention se rapporte au domaine des dispositifs d'étalonnage pour des appareils de mesure de force ou de couple ainsi que pour des appareils de fixation destinés à appliquer une force ou un couple constant.

### Arrière-plan technologique

Dans le cadre des processus d'assemblage (secteur T0), il y a lieu de respecter un couple, une force ou encore une force et un couple. Ces caractéristiques de couple et de force requièrent des équipements de mesure spécifiques devant être périodiquement étalonnés.

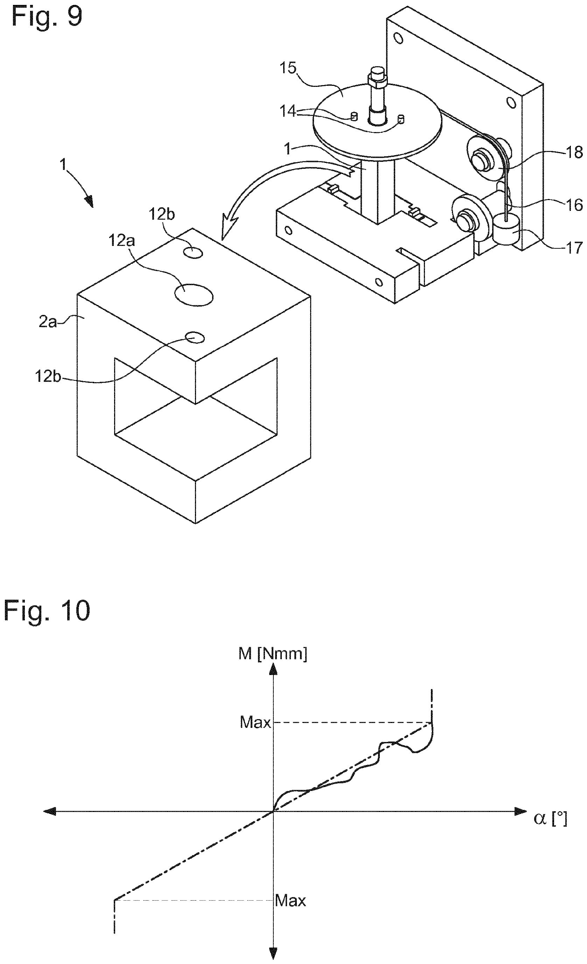

L'étalonnage peut être réalisé via des capteurs qui ont pour désavantage d'être coûteux ou encore via des poids étalons. Dans ce dernier cas, l'étalonnage d'un appareil de mesure de couple s'effectue à l'aide d'un poids étalon de masse m créant un couple M par le biais d'un bras de levier dont la longueur I est parfaitement connue (M=m*l). Cette procédure d'étalonnage nécessite la sortie de l'appareil de son atelier et son éventuel envoi au fournisseur. L'appareil est alors immobilisé pendant 1 à 3 jours, ce qui occasionne des désagréments au contrôle de production. En outre, entre l'étalonnage en extérieur et le retour à l'atelier, l'appareil de mesure peut avoir subi un choc qui altère sa calibration. Par ailleurs, l'étalonnage d'un appareil de mesure par un poids étalon représente une condition de mesure statique et, de ce fait, n'implique pas la totalité de la conception mécanique de l'appareil. Or, les appareils de mesure de couple, et en particulier de couple de friction, sont censés mesurer en dynamique, c.à.d. garantir un couple à chaque angle donné. En réalité, comme montré à la figure 10, une certaine dérive sur la courbe de mesure peut être observée. Un étalonnage statique via un poids étalon ne permettra pas d'observer ou de corriger cette erreur de linéarité de la fonction couple/angle.

On connait du document JP 2001 228041 un dispositif d'étalonnage de force ou de couple dans lequel est prévu une butée qui limite le déplacement de la d'une partie mobile par rapport à une autre. On connait également du document CN 103 528 752 un dispositif de mesure de force et de couple.

### Résumé de l'invention

Pour remédier aux désavantages précités, la présente invention a pour objet de proposer un dispositif d'étalonnage dépourvu de capteur, ce qui rend son principe de fonctionnement simple et peu onéreux et permet d'éviter les calibrations périodiques nécessaires au bon fonctionnement du capteur. La présente invention a également pour objet de proposer un dispositif d'étalonnage compatible sur n'importe quel équipement de mesure dont il doit assurer la calibration et permettant un étalonnage instantané de ce dernier. La présente invention a également pour objet de proposer un dispositif d'étalonnage permettant un étalonnage dynamique des appareils motorisés et non motorisés.

A cet effet, la présente invention propose un nouveau dispositif d'étalonnage de force apte à travailler dans les deux directions de déplacement (correspondant à la mesure d'une force de compression et d'une force de traction) et un nouveau dispositif d'étalonnage de couple opérant dans les deux sens de rotation conforme à la revendication 1 du brevet

Avantageusement, le dispositif d'étalonnage de couple a été au préalable étalonné afin de pouvoir vérifier la linéarité de la fonction couple/angle des appareils de mesure motorisés jusqu'à ce couple maximum.

Lors de la calibration de l'appareil de mesure, le dispositif d'étalonnage de couple ou de force (pour le cas d'un appareil de mesure de force de traction) peut être aisément accouplé à l'appareil de mesure. A cet effet, le dispositif est muni dans sa partie mobile et dans sa partie fixe d'orifices permettant de solidariser des composants de l'appareil de mesure. Dans le cas de l'utilisation du dispositif d'étalonnage sur un appareil de mesure de force de compression, aucun moyen d'accouplement à l'appareil de mesure n'est requis.

D'autres avantages ressortiront des caractéristiques exprimées dans les revendications, de la description détaillée de l'invention illustrée ci-après à l'aide des dessins annexés donnés à titre d'exemples nullement limitatifs.

### Brève description des figures

Les figures 1 et 2 représentent à l'aide de vues en perspective deux variantes du dispositif d'étalonnage de couple selon l'invention.
La figure 3 représente une vue sous un autre angle de la figure 1 avec la goupille de butée et les lames visibles en transparence.
La figure 4 représente une vue en perspective d'une variante d'un élément flexible du dispositif d'étalonnage selon l'invention *(Figure issue de la thèse N°2194 (2000) de Simon Henein, EPFL).*
La figure 5 représente une vue en perspective d'une autre variante d'un élément flexible du dispositif d'étalonnage selon l'invention avec une portion renforcée en son centre encadrée par des portions flexibles formant un col circulaire.
La figure 6 représente des vues partielles en plan de différentes géométries des portions flexibles de l'élément flexible de la figure 5 *(Figures issues de la thèse N°2194 (2000) de Simon Henein, EPFL).*
La figure 7 représente schématiquement un appareil de mesure de couple avec le dispositif d'étalonnage selon l'invention positionné entre la broche et la contre-broche.
Les figures 8a et 8b représentent respectivement une vue en perspective et une vue de côté du dispositif d'étalonnage de force selon l'invention.
La figure 9 représente schématiquement l'appareillage mis en œuvre pour calibrer le dispositif d'étalonnage de couple selon l'invention.
La figure 10 représente la courbe de calibration linéaire du dispositif d'étalonnage de couple selon l'invention versus une courbe de mesure irrégulière d'un appareil de mesure de couple.

### Description détaillée de l'invention

La présente invention se rapporte à un dispositif d'étalonnage pour des appareils destinés à mesurer une force ou un couple, ou encore pour des appareils destinés à appliquer une force ou un couple donnés tels que des visseuses.

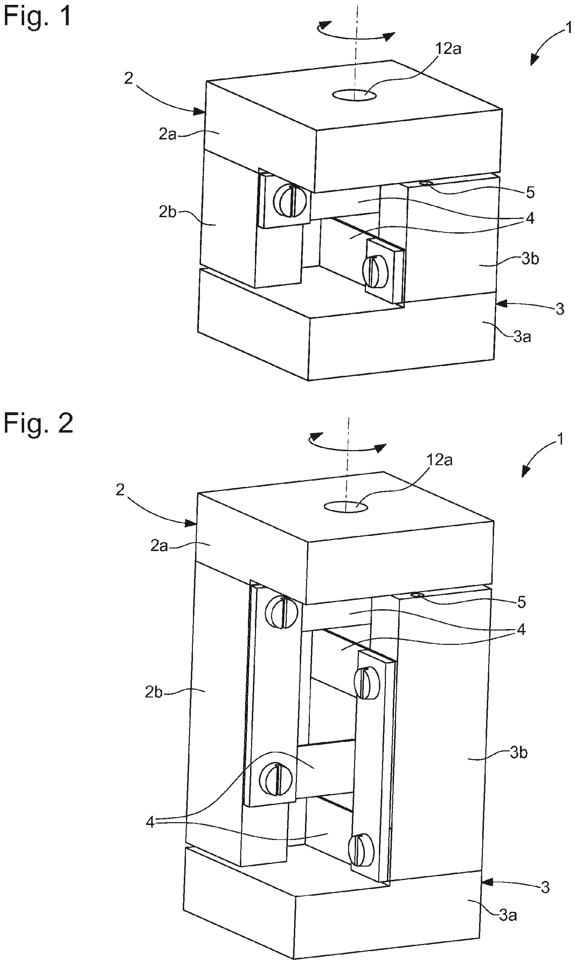

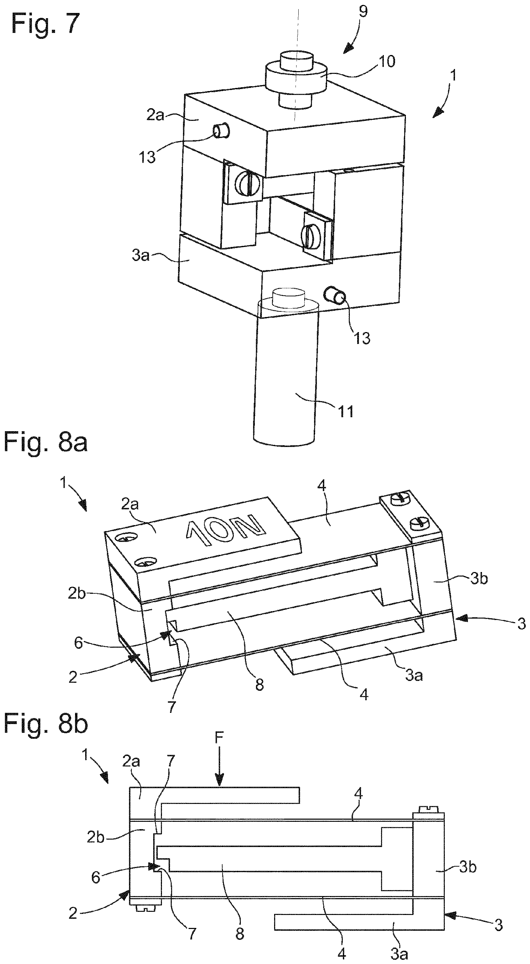

Le dispositif d'étalonnage de couple 1 selon l'invention est représenté aux figures 1-3 et le dispositif d'étalonnage de force 1 est représenté aux figures 8a-8b. Ils comportent deux parties 2,3 montées mobiles l'une par rapport à l'autre. Dans les exemples, la partie 2 est référencée comme mobile et la partie 3 est référencée comme fixe mais les dispositifs sont configurés pour fonctionner avec la partie 3 agissant comme partie mobile et la partie 2 agissant comme partie fixe. Pour le dispositif d'étalonnage de couple, la partie 2 est montée mobile en rotation dans les deux sens par rapport à la partie fixe 3. Pour le dispositif d'étalonnage de force, la partie 2 est montée mobile en translation par rapport à la partie fixe 3. Le dispositif peut être utilisé dans les deux directions de déplacement avec une force F appliquée sur la partie mobile 2 comme illustré à la figure 8b.

Les deux parties 2,3 sont reliées par un ou plusieurs éléments flexibles 4 formant des lames ou des profilés de section variable. On entend par élément flexible un élément constitué d'un matériau tolérant des déformations importantes sans déformation plastique. A cet égard, les éléments flexibles peuvent être réalisés en acier inox ressort, en acier fritté, en acier trempé et revenu, dans un alliage d'aluminium, en titane, en bronze, en laiton ou encore dans une matière plastique.

Chaque élément flexible 4 est fixé à une extrémité sur la partie mobile 2 et à son autre extrémité sur la partie fixe 3. Les éléments flexibles peuvent être rapportés par vissage. Il est également envisageable de réaliser l'étalon en une pièce par électro-érosion à fil par exemple.

Dans les exemples illustrés, la partie mobile 2 et la partie fixe 3 ont une forme sensiblement équivalente avec une base plan 2a,3a surmontée d'un montant 2b,3b sur lequel est fixée l'extrémité de l'élément flexible 4. Les parties fixe 3 et mobile 2 sont positionnées en sens inverse l'une par rapport à l'autre, en position dite tête-bêche, avec la base 3a de la partie fixe 3 formant le support du dispositif et la base 2a de la partie mobile 2 formant la portion sur laquelle le couple ou la force sont appliqués. De préférence, l'enveloppe du dispositif a une forme prismatique droite à base carrée (figures 1-2) ou rectangulaire (figures 8a-8b). Le tout forme un dispositif compact avec des dimensions n'excédant pas quelques centimètres (inférieures à 5 cm).

Pour le dispositif d'étalonnage de couple (figures 1-3), la partie mobile 2 ainsi que la partie fixe 3 comportent une base 2a,3a avec un montant 2b,3b vertical solidaire d'un coin de la base 2a,3a. De préférence, le montant 2b,3b a un profil en équerre avec un angle droit coïncidant avec un angle droit de la base 2a,3a. Les bases 2a,3a respectives de la partie mobile 2 et de la partie fixe 3 sont disposées en vis-à-vis avec les montants 2b,3b entre les deux. Ces montants 2b,3b sont disposés sur des coins opposés des bases 2a,3a respectives avec une extrémité de l'élément flexible 4 vissée sur une tranche de chaque montant 2b,3b.

Pour le dispositif d'étalonnage de force (figures 8a-8b), la partie mobile 2 et la partie fixe 3 ont également une position inversée l'une par rapport à l'autre. La partie mobile 2 et la partie fixe 3 ont une section de forme générale en L avec une branche du L formant la base 2a,3a et l'autre branche du L formant le montant 2b,3b. Les bases 2a,3a peuvent être plus ou moins longues et s'étendre selon une variante jusqu'à environ la mi-largeur du dispositif comme montré aux figures 8a-8b ou selon une autre variante non représentée s'étendre en-deçà ou au-delà de la mi-largeur et éventuellement sur toute la largeur du dispositif. Les montants 2b,3b sont disposés verticalement en vis-à-vis avec les élément flexibles 4 vissés à chaque extrémité dans l'épaisseur du montant 2b,3b.

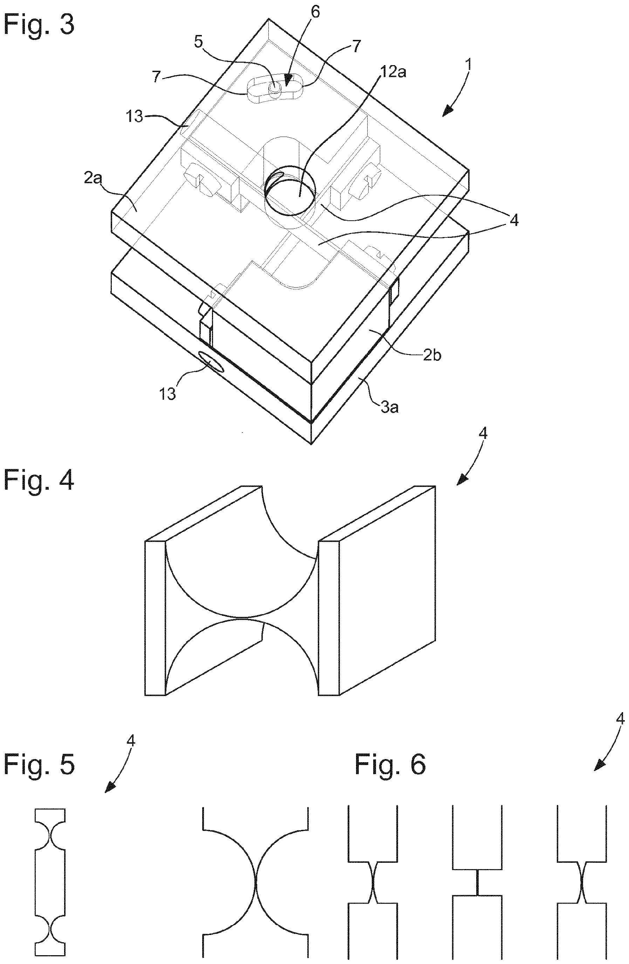

Pour les deux dispositifs d'étalonnage, le déplacement angulaire ou le déplacement en translation de la partie mobile 2 est limité par une butée 7 qui détermine respectivement le couple maximum ou la force maximum du dispositif. A la figure 3, on peut visualiser, pour le dispositif d'étalonnage de couple, la goupille 5 chassée dans un évidement 6 en arc de cercle. La goupille 5 se positionne entre le montant 3b de la partie fixe 3 et la base 2a de la partie mobile 2. Dans l'exemple illustré, la goupille 5 est solidaire de la partie fixe 3 et l'évidement 6 est ménagé dans la base 2a de la partie mobile 2, l'inverse est également possible. La partie mobile 2 est montée mobile dans les deux sens de rotation avec la goupille 5 positionnée au repos au milieu de l'arc de cercle avec chaque extrémité de l'arc de cercle formant la butée 7. Pour le dispositif d'étalonnage de force, l'évidement 6 est ménagé dans le montant 2b de la partie mobile 2, ou selon une variante non représentée dans le montant 3b de la partie fixe 3, avec l'extrémité d'une languette 8 qui est solidaire du montant opposé se déplaçant au sein de l'évidement. Au repos, l'extrémité de la languette est disposée à mi-course. Lors d'une sollicitation du dispositif dans l'une ou l'autre des directions de déplacement, l'extrémité de la languette se positionne contre une des butées 7 délimitant l'évidement 6.

En fonction de la gamme de couple ou de force à couvrir par le dispositif d'étalonnage, la géométrie et le nombre d'éléments flexibles sont variables. Par ailleurs, il peut y avoir plusieurs variantes d'agencement des éléments flexibles au sein du dispositif d'étalonnage.

L'élément flexible peut former une lame de largeur constante sur toute la longueur comme dans les exemples illustrés aux figures 1 et 8a. Il est également possible d'avoir des géométries de lame avec une largeur variable, par exemple en forme de trapèze ou encore de rectangle avec un trou oblong en son centre. D'autres designs sont possibles avec des profilés décrivant deux demi-cercles concaves comme à la figure 4. On peut également envisager un élément flexible 4 renforcé en son centre, avec des parties flexibles prismatiques ou circulaires encadrant la partie renforcée (figures 5 et 6).

Le nombre d'éléments flexibles au sein du dispositif d'étalonnage de couple ou de force peut être de 1,2,3,4 voire plus. Pour le dispositif d'étalonnage de couple, le design avec deux lames orthogonales est optimal (figure 1). Les deux lames peuvent être disposées à différentes hauteurs sur les montants ou, selon une variante non représentée, les deux lames peuvent se croiser en leur centre. Les deux lames permettent de guider correctement le mouvement et l'agencement orthogonal maximise la rigidité dans le sens transversal du dispositif. Un dispositif à une lame permettra au dispositif de remplir sa fonction d'étalonnage. Cependant, l'axe de rotation sera moins bien maîtrisé. En présence de plus de deux lames, le mouvement est sur-guidé, donc plus rigide et plus sensible aux tolérances mécaniques d'usinage et d'assemblage. Pour le dispositif d'étalonnage de force, une construction à deux lames est également privilégiée pour un déplacement linéaire propre sans rigidité excessive du système. Avantageusement, les deux éléments flexibles 4 sont disposés parallèlement par rapport à chaque base 2a,3a et, de part et d'autre, de l'évidement 6 (figures 8a-8b).

Concrètement, trois typologies de couple sont identifiées, à savoir :
- Couple de friction (0.09 - 1.0 Nmm)
- Couple de tenue (1.0 - 50.0 Nmm)
- Couple de rupture (>50.0 Nmm).
et quatre dispositifs d'étalonnage distincts de couple ont été réalisés pour couvrir ces gammes.

A titre d'exemple, la table 1 reprend les plages de couples couvertes et les géométries du dispositif d'étalonnage correspondantes pour des lames en acier inox ressort.

**Table 1**

| **Données** | | | **Lames** | | | **Salon** | | |
|---|---|---|---|---|---|---|---|---|
| Famille de pièces | Rage de couples (Nmm) | Couple maxi étalon (Nmm) | h (mm) | b (mm) | l (mm) | N° | Diam ext mini (mm) | Hauteur mini (mm) |
| Fournitures u-couple | 0.015-0.09 | 0.15 | 0.05 | 2 | 10 | 1 | 15 | 5 |
| Fournitures friction | 0.6-1 | 1.5 | 0.1 | 2.5 | 10 | 2 | 15 | 6 |
| Fournitures tenue/rupture/friction | 1-32 | 50 | 0.25 | 5 | 10 | 3 | 15 | 11 |
| Masse oscillante + segment | 0-500 | 500 | 0.35 | 20 (2x10) | 10 | 4 | 15 | 43 |

Les étalons N°1 à 3 présentent une configuration selon la figure 1 avec deux lames orthogonales et l'étalon N°4 comporte quatre lames orthogonales selon la géométrie de la figure 2. Toutes les lames ont une section rectangulaire constante avec une largeur b et une épaisseur h. Dans les exemples, la longueur I des lames a été maintenue constante (10 mm) et la rigidité du dispositif a été modulée en changeant l'épaisseur h et la largeur b des lames. En conséquence, l'étalon N°4 comporte quatre lames pour atteindre le niveau de rigidité requis. Cependant, en modulant également la longueur de la lame, la construction aurait pu être limitée à deux lames pour un même couple maximum.

Concernant les forces, trois typologies de force sont identifiées, à savoir ;
- Force de compression des ressorts
- Force de tenue
- Force de chassage/déchassage,
et deux étalons ont été conçus en conséquence. La table 2 reprend les dimensions pour des étalons à 10 et 50N pour des lames en inox ressort.

**Table 2**

| | Force maxi (N) | Course maxi (mm) | b (mm) | l (mm) | h (mm) |
|---|---|---|---|---|---|
| Etalon 10N | 10 | 2 | 20 | 40 | 0.35 |
| Etalon 50N | 50 | 2 | 20 | 40 | 0.55 |

Comme pour le dispositif d'étalonnage de couple, plusieurs dimensionnements sont possibles pour atteindre la même force maximum de l'étalon avec une même course. Dans les exemples, il a été choisi de maintenir une même longueur l (40 mm) et une même largeur b (20 mm) des lames de section rectangulaire et de modifier uniquement l'épaisseur h de la lame.

La figure 7 représente le dispositif d'étalonnage de couple 1 selon l'invention positionné sur un appareil de mesure de couple 9 avec la partie mobile 2 du dispositif montée sur la broche 10 et la partie fixe 3 montée sur la contre-broche 11. Pour la fixation, chaque base 2a,3a est munie d'un orifice central 12a visible aux figures 1-3 pour réceptionner directement la broche et la contre-broche ou une pièce intermédiaire et munie d'une vis latérale 13 disposée sur les bases. Lors de l'étalonnage de l'appareil de mesure, la partie mobile mise en rotation par la broche arrive à butée après un déplacement angulaire donné correspondant au couple maximum de l'étalon. Sur la figure 10, on peut visualiser pour les deux sens de rotation, le couple maximum atteint en fin de course. Le dispositif d'étalonnage selon l'invention permet également un étalonnage dynamique en fonction du déplacement angulaire jusqu'à butée pour des appareils de mesure motorisés.

Un étalonnage dynamique requiert que le dispositif d'étalonnage ait lui-même été étalonné au préalable. L'étalonnage s'effectue de manière conventionnelle à l'aide de poids étalons. La figure 9 représente l'appareil utilisé à cet effet. La partie mobile du dispositif d'étalonnage 1 est solidarisée via deux goupilles d'entraînement 14 chassées dans des orifices latéraux 12b de la base à une poulie centrale 15 qui reçoit le câble 16 muni du poids étalon 17 à son extrémité. A l'aide de différents poids étalons, la droite couple/angle de rotation est établie (figure 10). L'étalonnage du dispositif d'étalonnage permet ainsi de caractériser la plage de fonctionnement de l'étalon en termes de linéarité et de valeur cible, c.à.d. de valeur maximum. Le couple maximum souhaité est alors fixé sur le dispositif d'étalonnage par la butée.

### Légende

(1) Dispositif d'étalonnage de couple ou de force
(2) Partie mobile
   a. Base
   b. Montant
(3) Partie fixe
   a. Base
   b. Montant
(4) Elément flexible, aussi dit compliant
(5) Goupille de butée
(6) Évidement
(7) Butée
(8) Languette
(9) Appareil de mesure de couple
(10) Broche
(11) Contre-broche
(12) Orifice
   a. Central
   b. Latéral
(13) Vis de fixation
(14) Goupille d'entraînement
(15) Poulie centrale
(16) Câble
(17) Poids étalon
(18) Poulie de renvoi

## Revendications

1. Dispositif d'étalonnage (1) de couple ou de force pour un appareil (9) destiné à mesurer ou à appliquer un couple ou une force respectivement, ledit dispositif (1) comportant une première partie (3), une seconde partie (2) et au moins un élément flexible (4) reliant la première partie (3) à la seconde partie (2), la seconde partie (2) étant montée mobile en rotation ou en translation par rapport à la première partie (3) fixe, le dispositif (1) comprenant une butée (7), ledit dispositif étant **caractérisé en ce que** la butée est agencée pour limiter le déplacement de la seconde partie (2), fixer une courbe de calibration linéaire sur la base de la valeur maximum dudit déplacement et ainsi fixer le couple maximum ou la force maximum du dispositif d'étalonnage (1) correspondant à ladite valeur, **en ce que** ledit au moins élément flexible est formé d'un ressort lame et **en ce que** la première partie (3) et la seconde partie (2) sont chacune formées d'une base plan (2a,3a) surmontée d'un montant (2b,3b) sur lequel est fixée une extrémité de l'élément flexible (4), la première partie (3) et la seconde partie (2) étant disposées tête-bêche avec la base (3b) de la première partie (3) formant le support du dispositif (1) et la base (2b) de la seconde partie (2) formant la portion sur laquelle le couple ou la force est appliquée lors de l'étalonnage de l'appareil (9)

2. Dispositif (1) selon la revendication 1, **caractérisé en ce que** la seconde partie (2) est montée mobile dans les deux sens de rotation ou dans les deux directions de translation respectivement avec une butée (7) pour chaque sens de rotation ou chaque direction de translation.

3. Dispositif (1) selon la revendication 1 ou 2, **caractérisé en ce que**, pour le dispositif d'étalonnage de couple, chaque montant (2b,3b) a un profil en équerre avec un angle droit coïncidant avec un angle droit de sa base (2a,3a), les extrémités de l'élément flexible (4) étant respectivement fixées sur une tranche de chaque montant (2b,3b).

4. Dispositif (1) selon la revendication 1 ou 3, **caractérisé en ce que** le dispositif d'étalonnage de couple comporte une goupille (5) chassée dans un évidement (6) en arc de cercle délimitant deux butées (7), la goupille (5) étant solidaire du montant (3b) de la première partie (3) et l'évidement (6) étant ménagé dans la base (2a) de la seconde partie (2) ou l'inverse.

5. Dispositif (1) selon la revendication 1 ou 2, **caractérisé en ce que**, pour le dispositif d'étalonnage de force, la première partie (3) et la seconde partie (2) ont une section de forme générale en L avec une branche du L formant la base (2a,2b) et l'autre branche formant le montant (2b,3b), les extrémités de l'élément flexible (4) étant respectivement fixées dans l'épaisseur de chaque montant (2b,3b).

6. Dispositif (1) selon la revendication 1 ou 5, **caractérisé en ce que** le dispositif d'étalonnage de force comporte une languette (8) ayant une extrémité disposée au sein d'un évidement (6) délimitant deux butées (7), l'évidement (6) étant ménagé dans le montant (2b) de la seconde partie (2) et la languette (8) ayant son autre extrémité solidaire du montant (3b) de la première partie (3) ou l'inverse.

7. Dispositif (1) selon la revendication 4 ou 6, **caractérisé en ce qu'**en l'absence de sollicitation dudit dispositif (1), la goupille (5) ou la languette (8) se trouve à mi-course au sein de l'évidement (6).

8. Dispositif (1) selon la revendication 1 ou 5, **caractérisé en ce que** le dispositif d'étalonnage de force comporte deux éléments flexibles (4) s'étendant parallèlement entre les montants (2b,3b).

9. Dispositif (1) selon la revendication 1 ou 4, **caractérisé en ce que** le dispositif d'étalonnage de couple comporte deux ou quatre éléments flexibles (4) disposés orthogonalement les uns par rapport aux autres le long des montants (2b,3b).

10. Dispositif (1) selon l'une quelconque des revendications précédentes, **caractérisé en ce que** la lame se présente sous la forme d'un profilé ayant des sections variables.

11. Dispositif (1) selon la revendication 10, **caractérisé en ce que** la lame est en forme de rectangle, de trapèze ou de rectangle avec un trou oblong en son centre.

12. Dispositif (1) selon la revendication 10, **caractérisé en ce que** la lame présente un profilé décrivant deux demi-cercles concaves accolés ou un profilé avec une partie renforcée en son centre et des parties prismatiques ou circulaires encadrant la partie renforcée.

13. Dispositif (1) selon la revendication 1, **caractérisé en ce que**, pour le dispositif d'étalonnage de couple, chaque base (2a,3a) comporte un orifice (12a) permettant l'accouplement dudit dispositif (1) à l'appareil (9) destiné à mesurer ou à appliquer le couple.

14. Dispositif (1) selon la revendication 1, **caractérisé en ce que** le dispositif d'étalonnage de couple a été préalablement calibré pour permettre un étalonnage dynamique de l'appareil (9) destiné à mesurer ou à appliquer le couple lorsque ce dernier est motorisé.

15. Dispositif (1) selon l'une quelconque des revendications précédentes, **caractérisé en ce que** la géométrie et le nombre d'éléments flexibles (4) sont déterminés pour couvrir quatre gammes de couples s'étendant respectivement jusque 0.015, 1.5, 50 et 500 Nmm et deux gammes de force de 10 et 50 N.

16. Dispositif (1) selon l'une quelconque des revendications précédentes, **caractérisé en ce que** son enveloppe forme un prisme droit à base carrée ou rectangulaire n'ayant aucune dimension excédant 5 cm.

## Patentansprüche

1. Vorrichtung zum Kalibrieren (1) eines Drehmoments oder einer Kraft für ein Gerät (9), das zum Messen oder zum Anwenden jeweils eines Drehmoments oder einer Kraft bestimmt ist, wobei die Vorrichtung (1) einen ersten Teil (3), einen zweiten Teil (2) und mindestens ein flexibles Element (4) aufweist, das den ersten Teil (3) mit dem zweiten Teil (2) verbindet, wobei der zweite Teil (2) in Bezug auf den festen ersten Teil (3) rotatorisch oder translatorisch beweglich angebracht ist, wobei die Vorrichtung (1) einen Anschlag (7) umfasst, wobei die Vorrichtung **dadurch gekennzeichnet ist, dass** der Anschlag ausgebildet ist, um die Verlagerung des zweiten Teils (2) zu begrenzen, eine lineare Kalibrierungskurve auf der Basis des maximalen Wertes der Verlagerung festzulegen und somit das maximale Drehmoment oder die maximale Kraft der Kalibrierungsvorrichtung (1) entsprechend dem Wert festzulegen, dass das mindestens eine flexible Element von einer Blattfeder gebildet ist und dass sowohl der erste Teil (3) als auch der zweite Teil (2) von einer ebenen Basis (2a, 3a) gebildet sind, auf der ein Pfosten (2b, 3b) steht, an dem ein Ende des flexiblen Elements (4) befestigt ist, wobei der erste Teil (3) und der zweite Teil (2) Kopf-an-Fuß angeordnet sind mit der Basis (3b) des ersten Teils (3), die den Träger der Vorrichtung (1) bildet, und der Basis (2b) des zweiten Teils (2), die den Abschnitt bildet, auf den das Drehmoment oder die Kraft beim Kalibrieren des Geräts (9) angewendet wird.

2. Vorrichtung (1) nach Anspruch 1, **dadurch gekennzeichnet, dass** der zweite Teil (2) in den zwei Rotationsrichtungen oder in den zwei Translationsrichtungen jeweils mit einem Anschlag (7) für jede Rotationsrichtung oder jede Translationsrichtung beweglich angebracht ist.

3. Vorrichtung (1) nach Anspruch 1 oder 2, **dadurch gekennzeichnet, dass** für die Vorrichtung zum Kalibrieren eines Drehmoments jeder Pfosten (2b, 3b) ein Winkelprofil mit einem rechten Winkel hat, der mit einem rechten Winkel seiner Basis (2a, 3a) übereinstimmt, wobei die Enden des flexiblen Elements (4) jeweils auf einer Kante jedes Pfostens (2b, 3b) befestigt sind.

4. Vorrichtung (1) nach Anspruch 1 oder 3, **dadurch gekennzeichnet, dass** die Vorrichtung zum Kalibrieren eines Drehmoments einen Stift (5) aufweist, der in eine kreisbogenförmige Aussparung (6) eingesetzt ist, die zwei Anschläge (7) begrenzt, wobei der Stift (5) mit dem Pfosten (3b) des ersten Teils (3) fest verbunden ist und die Aussparung (6) in die Basis (2a) des zweitens Teil (2) eingearbeitet ist oder umgekehrt.

5. Vorrichtung (1) nach Anspruch 1 oder 2, **dadurch gekennzeichnet, dass** für die Vorrichtung zum Kalibrieren einer Kraft der erste Teil (3) und der zweite Teil (2) einen allgemein L-förmigen Querschnitt haben mit einem Schenkel des L, der die Basis (2a, 2b) bildet, und dem anderen Schenkel, der den Pfosten (2b, 3b) bildet, wobei die Enden des flexiblen Elements (4) jeweils in der Dicke jedes Pfostens (2b, 3b) befestigt sind.

6. Vorrichtung (1) nach Anspruch 1 oder 5, **dadurch gekennzeichnet, dass** die Vorrichtung zum Kalibrieren einer Kraft eine Zunge (8) aufweist, die ein Ende hat, das innerhalb einer Aussparung (6) angeordnet ist, die zwei Anschläge (7) begrenzt, wobei die Aussparung (6) im Pfosten (2b) des zweiten Teils (2) eingerichtet ist und das andere Ende der Zunge (8) mit dem Pfosten (3b) des ersten Teils (3) fest verbunden ist oder umgekehrt.

7. Vorrichtung (1) nach Anspruch 4 oder 6, **dadurch gekennzeichnet, dass** sich der Stift (5) oder die Zunge (8) bei Abwesenheit einer Beanspruchung der Vorrichtung (1) auf halbem Weg innerhalb der Aussparung (6) befindet.

8. Vorrichtung (1) nach Anspruch 1 oder 5, **dadurch gekennzeichnet, dass** die Vorrichtung zum Kalibrieren einer Kraft zwei flexible Elemente (4) aufweist, die sich parallel zwischen den Pfosten (2b, 3b) erstrecken.

9. Vorrichtung (1) nach Anspruch 1 oder 4, **dadurch gekennzeichnet, dass** die Vorrichtung zum Kalibrieren eines Drehmoments zwei oder vier flexible Elemente (4) aufweist, die zueinander orthogonal entlang der Pfosten (2b, 3b) angeordnet sind.

10. Vorrichtung (1) nach einem der vorangehenden Ansprüche, **dadurch gekennzeichnet, dass** die Lamelle in Form eines Profils mit variablen Querschnitten vorliegt.

11. Vorrichtung (1) nach Anspruch 10, **dadurch gekennzeichnet, dass** die Lamelle die Form eines Rechtecks, eines Trapezes oder eines Rechtecks mit einem Langloch in ihrem Zentrum hat.

12. Vorrichtung (1) nach Anspruch 10, **dadurch gekennzeichnet, dass** die Lamelle ein Profil aufweist, das zwei aneinander liegende konkave Halbkreise beschreibt oder ein Profil mit einem in seinem Zentrum verstärkten Teil und prismatischen oder kreisrunden Teilen, die den verstärkten Teil umgeben.

13. Vorrichtung (1) nach Anspruch 1, **dadurch gekennzeichnet, dass** für die Vorrichtung zum Kalibrieren eines Drehmoments jede Basis (2a, 3a) eine Öffnung (12a) aufweist, die das Koppeln der Vorrichtung (1) mit dem Gerät (9) erlaubt, das zum Messen oder Anwenden des Drehmoments bestimmt ist.

14. Vorrichtung (1) nach Anspruch 1, **dadurch gekennzeichnet, dass** die Vorrichtung zum Kalibrieren eines Drehmoments zuvor kalibriert wurde, um eine dynamische Kalibrierung des Geräts (9) zu erlauben, das zum Messen oder zum Anwenden des Drehmoments bestimmt ist, wenn dieses motorisiert ist.

15. Vorrichtung (1) nach einem der vorangehenden Ansprüche, **dadurch gekennzeichnet, dass** die Geometrie und die Anzahl flexibler Elemente (4) bestimmt sind, um vier Drehmomentbereiche, die sich jeweils bis 0,015, 1,5, 50 und 500 Nmm erstrecken, und zwei Kraftbereiche von 10 und 50 N abzudecken.

16. Vorrichtung (1) nach einem der vorangehenden Ansprüche, **dadurch gekennzeichnet, dass** ihre Hülle ein gerades Prisma mit quadratischer oder rechteckiger Basis mit keiner Abmessung über 5 cm bildet.

## Claims

1. Torque or force calibration device (1) for a unit (9) intended to measure or to apply a torque or a force respectively, said device (1) including a first part (3), a second part (2) and at least one flexible element (4) linking the first part (3) to the second part (2), the second part (2) being mounted to be mobile in rotation or in translation relative to the fixed first part (3), the device (1) comprising an abutment (7), said device being **characterised in that** the abutment is arranged to limit the displacement of the second part (2), fixing a linear calibration curve on the basis of the maximum value of said displacement and thus fixing the maximum torque or the maximum force of the calibration device (1) corresponding to said value, **in that** said at least one flexible element is formed of a leaf spring and **in that** the first part (3) and the second part (2) are each formed by a planar base (2a,3a) topped by an upright (2b,3b) onto which is fixed an end of the flexible element (4), the first part (3) and the second part (2) being disposed head to tail with the base (3b) of the first part (3) forming the support of the device (1) and the base (2b) of the second part (2) forming the portion to which the torque or the force is applied during the calibration of the unit (9).

2. Device (1) according to Claim 1, **characterised in that** the second part (2) is mounted to be mobile in both directions of rotation or in both directions of translation respectively with an abutment (7) for each direction of rotation or each direction of translation.

3. Device (1) according to Claim 1 or 2, **characterised in that**, for the torque calibration device, each upright (2b,3b) has a bracket profile with a right angle coinciding with a right angle of its base (2a,3a), the ends of the flexible element (4) being respectively fixed onto an edge of each upright (2b,3b).

4. Device (1) according to Claim 1 or 3, **characterised in that** the torque calibration device includes a pin (5) driven into an opening (6) in the form of a circular arc delimiting two abutments (7), the pin (5) being secured to the upright (3b) of the first part (3) and the opening (6) being formed in the base (2a) of the second part (2) or vice versa.

5. Device (1) according to Claim 1 or 2, **characterised in that**, for the force calibration device, the first part (3) and the second part (2) have a generally L-shaped section with one branch of the L forming the base (2a,2b) and the other branch forming the upright (2b,3b), the ends of the flexible element (4) being respectively fixed in the thickness of each upright (2b,3b).

6. Device (1) according to Claim 1 or 5, **characterised in that** the force calibration device includes a tongue (8) having one end disposed in an opening (6) delimiting two abutments (7), the opening (6) being formed in the upright (2b) of the second part (2) and the tongue (8) having its other end secured to the upright (3b) of the first part (3) or vice versa.

7. Device (1) according to Claim 4 or 6, **characterised in that**, in the absence of stressing of said device (1), the pin (5) or the tongue (8) is located at mid-travel in the opening (6).

8. Device (1) according to Claim 1 or 5, **characterised in that** the force calibration device includes two flexible elements (4) extending parallel between the uprights (2b,3b).

9. Device (1) according to Claim 1 or 4, **characterised in that** the torque calibration device includes two or four flexible elements (4) disposed orthogonally relative to one another along the uprights (2b,3b).

10. Device (1) according to any one of the preceding claims, **characterised in that** the blade is in the form of a profile having variable sections.

11. Device (1) according to Claim 10, **characterised in that** the blade is in the form of a rectangle, trapezium or of a rectangle with an oblong hole at its centre.

12. Device (1) according to Claim 10, **characterised in that** the blade has a profile describing two attached concave half-circles or a profile with a reinforced part at its centre and prismatic or circular parts bracketing the reinforced part.

13. Device (1) according to Claim 1, **characterised in that**, for the torque calibration device, each base (2a,3a) includes an orifice (12a) allowing the coupling of said device (1) to the unit (9) intended to measure or to apply the torque.

14. Device (1) according to Claim 1, **characterised in that** the torque calibration device has been previously gauged to allow a dynamic calibration of the unit (9) intended to measure or to apply the torque when the latter is motorised.

15. Device (1) according to any one of the preceding claims, **characterised in that** the geometry and the number of flexible elements (4) are determined to cover four ranges of torques extending respectively up to 0.015, 1.5, 50 and 500 Nmm and two force ranges of 10 and 50 N.

16. Device (1) according to any one of the preceding claims, **characterised in that** its envelope forms a straight prism with square or rectangular base having no dimension exceeding 5 cm.
